(19) Europäisches Patentamt
European Patent Office
Office européen des brevets

(11) **EP 1 859 502 B1**

(12) **FASCICULE DE BREVET EUROPEEN**

(45) Date de publication et mention
de la délivrance du brevet:
**02.05.2012 Bulletin 2012/18**

(21) Numéro de dépôt: **06726255.0**

(22) Date de dépôt: **17.03.2006**

(51) Int Cl.:
*H01M 8/12* (2006.01)      *H01M 8/06* (2006.01)
*C01B 3/26* (2006.01)      *C25B 1/04* (2006.01)
*H01M 4/86* (2006.01)

(86) Numéro de dépôt international:
**PCT/FR2006/050235**

(87) Numéro de publication internationale:
**WO 2006/097663 (21.09.2006 Gazette 2006/38)**

(54) **CELLULE DE PILE À COMBUSTIBLE HAUTE TEMPÉRATURE À CONDUCTION MIXTE ANIONIQUE ET PROTONIQUE**

HOCHTEMPERATUR-BRENNSTOFFZELLE MIT GEMISCHTER ANIONISCHER UND PROTONISCHER LEITUNG

HIGH TEMPERATURE FUEL CELL WITH MIXED ANIONIC AND PROTONIC CONDUCTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.03.2005 FR 0550696**

(43) Date de publication de la demande:
**28.11.2007 Bulletin 2007/48**

(73) Titulaire: **ARMINES**
**75272 Paris Cedex 06 (FR)**

(72) Inventeur: **THOREL, Alain**
**F-91770 Saint-Vrain (FR)**

(74) Mandataire: **Lebrette, Camille**
**SCHMIT CHRETIEN SNC**
**16, rue de la Paix**
**75002 Paris (FR)**

(56) Documents cités:
EP-A2- 1 170 812      JP-A- 2005 190 970
US-A- 4 722 873       US-A- 6 013 386
US-A1- 2002 031 695   US-A1- 2004 072 039

• XU ET AL: "Ion exchange membranes: State of their development and perspective" JOURNAL OF MEMBRANE SCIENCE, ELSEVIER SCIENTIFIC PUBL.COMPANY. AMSTERDAM, NL, vol. 263, no. 1-2, 15 octobre 2005 (2005-10-15), pages 1-29, XP005081239 ISSN: 0376-7388
• RACHID EL MOUSSAOUI ET AL: "CO-ION LEAKAGE THROUGH BIPOLAR MEMBRANES INFLUENCE ON I-V RESPONSES AND WATER-SPLITTING EFFICIENCY" JOURNAL OF MEMBRANE SCIENCE, ELSEVIER SCIENTIFIC PUBL.COMPANY. AMSTERDAM, NL, vol. 90, no. 3, 4 mai 1994 (1994-05-04), pages 283-292, XP000490141 ISSN: 0376-7388
• PATENT ABSTRACTS OF JAPAN vol. 1995, no. 08, 29 septembre 1995 (1995-09-29) & JP 07 130382 A (ISHIKAWAJIMA HARIMA HEAVY IND CO LTD), 19 mai 1995 (1995-05-19)

## Description

Le domaine technique de la présente invention est celui des piles à combustible et des électrolyseurs à haute température.

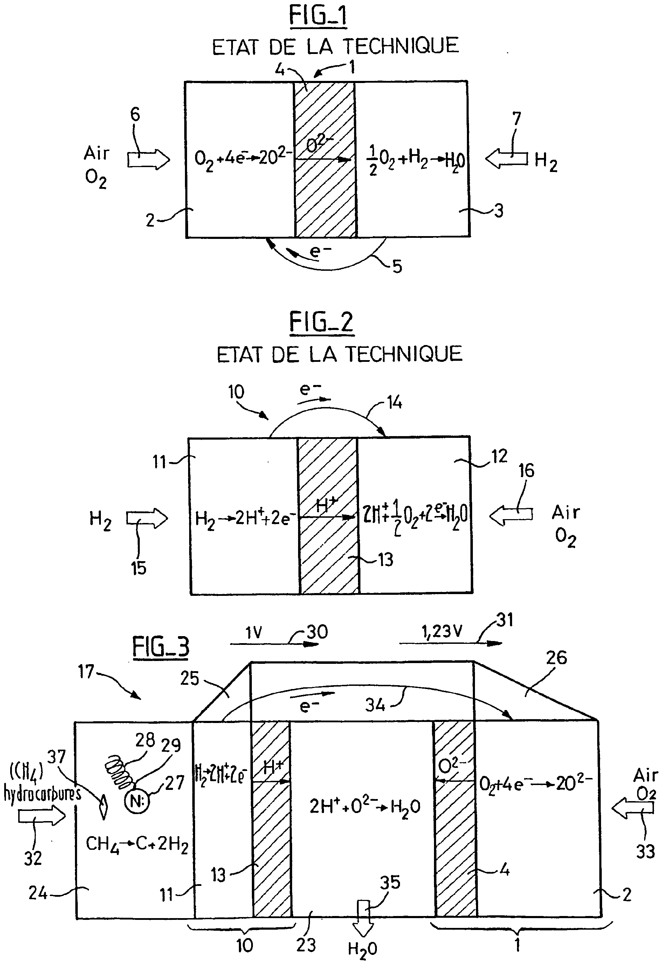

On connaît des cellules 1 de pile à combustible de type anionique, ou cellules SOFC (Solid Oxide Fuel Cell en anglais) représentées à la figure 1. Ces cellules 1 comportent une cathode 2 et une anode 3 reliées entre elles par l'intermédiaire d'un électrolyte 4. Ces cellules 1 créent un courant 5 allant de l'anode 3 émettrice d'électrons vers la cathode 2 réceptrice d'électrons.

A cette fin, de l'air ou de l'oxygène 6 est acheminé vers la cathode 2. Cette cathode 2 transforme l'oxygène de l'air en ions $O_2^-$. Ces ions $O_2^-$ traversent alors l'électrolyte 4 vers l'anode 3. Ces ions $O_2^-$ se recombinent avec de l'hydrogène au niveau de l'anode 3 pour former de l'eau, après avoir libéré des électrons. Comme les molécules d'oxygène captent puis libèrent des électrons et que l'électrolyte 4 n'est pas conducteur électronique, le courant 5 se crée dans la pile de l'anode 3 vers la cathode 2 suivant un chemin extérieur à l'électrolyte 4.

On connaît également des cellules 10 de pile à combustible de type protonique ou cellules PCFC (Protonic Ceramic Fuel Cell en anglais) représentées à la figure 2. Ces cellules 10 comportent une anode 11 et une cathode 12 reliées entre elles par un électrolyte 13. Ces cellules 10 créent un courant 14 d'électrons allant de l'anode 11 vers la cathode 12.

A cette fin, de l'hydrogène est acheminé vers l'anode 11. Cette anode 11 transforme alors l'hydrogène en ions H+. Ces ions H+ traversent l'électrolyte 13 vers la cathode 12. Ces ions H+ se recombinent avec de l'oxygène au niveau de la cathode 12 pour former de l'eau, après avoir capté des électrons. Comme les molécules d'hydrogène libèrent puis captent des électrons et que l'électrolyte 13 n'est pas conducteur électronique, le courant 14 se crée dans la pile de l'anode 11 vers la cathode 12 suivant un chemin extérieur à l'électrolyte 13.

L'invention propose de combiner les deux cellules 1 et 10, de manière que les anions $O_2^-$ produit par la pile anionique et les protons H+ produits par la pile protonique se combinent entre eux pour former de l'eau. On connait le document XP005081239 publié le 15 octobre 2005 qui décrit une pile à combustible comprenant une membrane bipolaire polymère ayant une partie à conductivité protonique et une partie à conductivité cationique, les ions se recombinant dans la partie centrale.

A cette fin, dans l'invention, on supprime l'anode de la pile anionique et la cathode de la pile protonique et on relie les électrolytes de ces piles par l'intermédiaire d'une couche de liaison poreuse autorisant la recombinaison des ions H+ et des ions $O_2^-$ pour former de l'eau. En outre, on utilise une membrane de reformage pour la production d'hydrogène.

Plus précisément, l'invention résulte du couplage entre une membrane de reformage et de séparation d'hydrogène à conduction protonique à une cellule SOFC (Solid Oxide Fuel Cell en anglais) classique à conduction par ions oxygène, ceci plutôt que d'utiliser une anode à reformage progressif, difficile à mettre au point, et pour laquelle le problème du dépôt de carbone n'est aujourd'hui pas résolu.

La membrane de reformage est constituée d'un mésoporeux en nanodiamants à fonction catalytique (par exemple à particules de Ni) couplé à une membrane de séparation en oxyde à conduction protonique (à titre d'exemple, composés $BaCeO_3$, $BaZrO_3$ ou $SrCeO_3$). L'art antérieur montre que les propriétés d'un support de catalyse en nanodiamants sont excellentes. Associés à un catalyseur classique (par exemple des particules de nickel), la réaction de reformage par exemple du méthane peut être catalysée dès 600°C (au lieu des 700°C à 750°C habituels) grâce à une très bonne gestion des résidus carbonés qui croissent sous forme filamentaires à proximité des particules de nickel, sans empoisonner les sites actifs de ces particules de nickel.

De l'hydrogène d'excellente qualité peut ainsi être produit, puis filtré en étant transformé en protons au travers de la membrane protonique associée. Des protons H+ arrivent ainsi directement sur la SOFC couplée, conduisant à une efficacité maximale. De l'autre côté, une cellule SOFC "classique" transforme l'oxygène de l'air en ions $O_2^-$ (par exemple cathode en LSM + YSZ ou cérine/gadolinium) qui progressent au travers de l'électrolyte (par exemple en YSZ ou en composite cérine/gadolinium).

La couche de liaison entre l'électrolyte de la SOFC "classique" et la membrane de séparation protonique est un composite poreux fait d'une part d'un oxyde protonique (par exemple, $BaCeO_3$ ou $SrCeO_3$) et d'autre part d'un oxyde anionique (par exemple, YSZ ou cérine/gadolinium). Ces deux phases doivent percoler dans un ensemble fortement poreux. La fonction assurée par cette couche est la recombinaison entre les H+ provenant de la membrane de séparation post-reformage et les $O_2^-$ arrivant directement de l'électrolyte de la SOFC "classique". L'eau ainsi produite est évacuée par la porosité de la couche de liaison.

Les avantages de la cellule selon l'invention sont les suivants :

- Pas d'apparition d'eau aux électrodes (en régime statique, l'eau neutralise les sites actifs dans les systèmes classiques, nécessitant un flux de gaz dynamique aux électrodes) puisque l'eau est créée et évacuée au niveau de la membrane poreuse composite centrale où s'effectue la réaction $2H^+ + O^{2-} \rightarrow H_2O$

- Reformage direct in-situ à 600°C, et gestion non pénalisante des dépôts de carbone sur les facettes de nanodiamants;
- Pas de dépôt de carbone à l'anode de la SOFC
- Addition globale des potentiels électrochimiques des réactions :

$$2H_2O + 2e = H_2 + 2OH^-$$

$$V_{dex}[25°] = -0,8277V$$

$$O_2 + 4H^+ + 4e = 2H_2O$$

$$V_{dex}[25°] = +1,229V$$

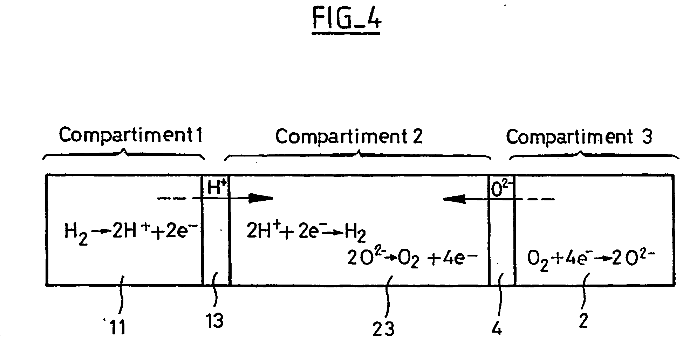

A 25°C, le potentiel électrochimique global au travers de la cellule complète est environ de (1,229 + 0,8277) V, soit plus de 2V au lieu de 1,23 V pour une SOFC seule. Le calcul est détaillé précisément avec la figure 4.

- Possibilité d'utiliser le réseau de distribution de gaz naturel, et de s'affranchir des problèmes de stockage et de transport d'hydrogène, tout en fournissant à la SOFC de l'hydrogène d'excellente qualité.
- L'hydrogène est produit "à la demande" puisque la force motrice est directement liée à la recombinaison des ions hydrogène et oxygène.
- La séparation de l'hydrogène étant le résultat d'un processus physique, et non pas stérique comme dans les membranes nanoporeuses, il n'est pas nécessaire d'avoir une forte pression partielle d'hydrogène en amont.
- Cohérence thermique entre la membrane de reformage et la SOFC qui fonctionnent toutes deux à 600-700°C°C.

L'invention sera mieux comprise à la lecture de la description qui suit et à l'examen des figures qui l'accompagnent. Ces figures ne sont données qu'à titre illustratif et nullement limitatif de l'invention. Ces figures montrent :

- figure 1 (déjà décrite) : une représentation schématique d'une cellule de pile à combustible de type anionique ;
- figure 2 (déjà décrite) : une représentation schématique d'une cellule de pile à combustible de type protonique ;
- figure 3 : une représentation schématique d'une cellule de pile à combustible selon l'invention ;
- figure 4 : une représentation schématique détaillée des différentes réactions se produisant à l'intérieur de la pile selon l'invention.

Les éléments identiques conservent la même référence d'une figure à l'autre.

La figure 3 montre une pile 17 selon l'invention dans laquelle l'électrode 2 et l'électrolyte 4 de la cellule 1 sont reliées à l'électrode 11 et à l'électrolyte 13 de la cellule 10 par l'intermédiaire d'une couche 23 de liaison faite d'un matériau composite poreux susceptible d'être le siège d'une recombinaison entre des protons H+ et des anions 02-.

Plus précisément, l'électrode 11 assurant la transformation de l'hydrogène en ions H+ est reliée à l'électrolyte 13 assurant le transport de ces ions H+. L'électrode 11 est en céramique protonique poreuse à conduction mixte, et est susceptible de conduire les ions H+ et les électrons. Cette électrode 11 est par exemple en SrCe03, BaZr03 ou en BaCeO3dopé, ou en cermet « Céramique Protonique/Métal (par exemple SrCe03/Ni ou BaCeO3/Ni) », et possède une forte densité de points de réaction, c'est à dire beaucoup d'interfaces solide/pores, pour permettre un bon rendement de la transformation de l'hydrogène en ions H+.

L'électrolyte 13 est en céramique protonique dense non conducteur électronique, par exemple en SrCe03, BaZr03 ou en BaCeO3 non dopé. Cet électrolyte 13 permet la séparation de l'hydrogène et le transfert des ions H+ de l'électrode 11 vers la couche 23 de liaison.

Par ailleurs, l'électrode 2 assurant la transformation d'oxygène en ions 02- est reliée à l'électrolyte 4 assurant le transport de ces ions 02-. L'électrode 2 assure une conduction mixte des ions 02- et des électrons captés par l'oxygène. A cet effet, l'électrode 2 est faite d'un conducteur mixte en milieu oxydant, par exemple en LSM (LaSrMn).

L'électrolyte 4 est réalisé en zircone stabilisée à l'yttrine (ZrO2/Y2O3) ou en CeO2 non conducteur électronique. Cet électrolyte 4 assure le transfert des ions 02- de l'électrode 4 vers la couche 23 de liaison.

La couche 23 de liaison est positionnée entre l'électrolyte 13 et l'électrolyte 4. Cette couche 23 est réalisée en un composite poreux comportant un oxyde protonique, par exemple BaCeO3, BaZr03 ou SrCe03, pour assurer le déplacement des ions H+, et un oxyde anionique, par exemple YSZ ou de la cérine/gadolinium, pour assurer le déplacement des anions 02-. Les réseaux ionique, protonique et poreux percolent, c'est-à-dire qu'ils sont suffisamment denses pour assurer le déplacement des protons H+, des anions 02- et l'évacuation de l'eau à l'intérieur de la couche 23 de liaison. Pour assurer cette percolation des réseaux, on s'assure que la couche 23 comporte au moins 30% d'oxyde anionique, au moins 30% d'oxyde protonique et au moins 30% de pores, dans le cadre d'une morphologie sphérique des composants de la couche 23.

En outre, une membrane 24 de reformage assurant la transformation de méthane CH4 en hydrogène est au contact de l'électrode 11. Cette membrane 24 permet de produire directement de l'hydrogène à partir de méthane. Ce système évite le stockage problématique de l'hydrogène.

A cet effet, cette membrane 24 est notamment le siège des réactions suivantes :

$$CH4 \rightarrow C + 2H2 \qquad (1)$$

$$H2O + CO \rightarrow CO2 + H2 \qquad (2)$$

$$2CO \longleftrightarrow CO2 + C \qquad (3)$$

$$C + H_2O \rightarrow CO + H2 \qquad (4)$$

La membrane 24 est poreuse et est réalisée à base de nickel pour favoriser la transformation du méthane en hydrogène (réaction (1)). La membrane comporte en outre des nanodiamants 37 de taille comprise entre 5 et 30 nm. Ces nanodiamants 37 permettent d'éviter la formation d'une monocouche de carbone autour des particules de nickel qui engendrerait une diminution de l'efficacité de la pile.

A cet effet, les nanodiamants 37 piègent les atomes 28 de carbone sous forme filamentaire dans une zone proche des particules 27 de Ni. Les atomes 28 de carbone s'accumulent ainsi les uns sur les autres, et forment des nanotubes autour des particules de Ni, les bases 29 de ces cylindres étant accrochées sur une face des particules 27 de nickel.

Les nanodiamants utilisés peuvent être obtenus à partir du broyage de diamants non exploitables en tant que pierre précieuse ou par détonation d'hydrocarbures dans une enceinte sous pression et à haute température.

En variante, la membrane 24 transforme un autre hydrocarbure en hydrogène. En variante, la pile 17 ne comporte pas de membrane 27 et est alimentée par une source distincte d'hydrogène.

Un collecteur d'électrons 25 au contact de l'électrode 11 et un distributeur d'électrons 26 au contact de l'électrode 2 assurent la circulation des électrons de l'électrode 11 (l'anode) vers l'électrode 2 (la cathode).

Lors d'un fonctionnement de la cellule 17 selon l'invention, un hydrocarbure, tel que du méthane CH4, est acheminé vers la membrane 24 qui le dissocie pour produire entre autres de l'hydrogène H2. Cet hydrogène H2 est ensuite transformé en ions H+ par l'anode 11, des électrons étant libérés par l'hydrogène pour réaliser cette transformation. Les ions H+ se déplacent vers la couche 23 de liaison via l'électrolyte 11. Ainsi, l'électrode 11 et l'électrolyte 13 filtrent l'hydrogène généré par la membrane 24 de reformage, et seuls les ions H+ arrivent sur la couche de liaison 23.

Par ailleurs, de l'air ou de l'oxygène 33 est acheminé vers la cathode 2 qui transforme cet oxygène en ions oxygène 02-, des électrons étant captés par les molécules d'oxygène 02 pour réaliser cette transformation. Les ions 02- sont alors transférés vers la couche 23 de liaison via l'électrolyte 4. Ces ions 02- et les ions H+ s'associent alors pour former de l'eau à l'intérieur de la couche 23 de liaison. L'eau formée est évacuée par les pores de cette couche 23 suivant un chemin 35.

Comme les électrons libérés au niveau de l'anode 11 compensent les électrons captés au niveau de la cathode 2, et que les électrolytes 4 et 13 ne sont pas conducteurs électroniques, le courant 34 se crée du collecteur vers le distributeur d'électrons suivant un chemin extérieur aux électrolytes.

Au bout d'un certain temps d'utilisation (quelques centaines à quelques milliers d'heures), on brûle, sous atmosphère oxydante, sans excéder une température où les nanodiamants se décomposent (700°C) les éléments de carbone piégés grâce aux nanodiamants 37 de manière à régénérer la membrane 24 de reformage.

La pile 17 possède globalement une différence de potentiel égale à la somme des différences de potentiel (30 et 31) des piles 1 et 10 prises séparément soit 2.3V comme montré ci-après. Comparé à la cellule 1, il faut environ deux fois moins de cellules pour réaliser une pile de 220V. La pile à combustible selon l'invention fonctionne à une température comprise entre 500 et 800°C environ.

La figure 4 montre le détail des équations se produisant au niveau de l'électrode 11 (compartiment 1), de la couche de liaison 23 (compartiment 2) et de l'électrode 2 (compartiment 3).

En circuit ouvert, il est possible d'établir les équilibres aux interfaces entre électrodes et couche de liaison. Avant de détailler les équations, on définit les expressions des potentiels électrochimiques ($\overline{\mu}$) des espèces en fonction des potentiels chimiques ($\mu$) et électriques ($\varphi$) :

$$\widetilde{\mu}_{X^{n-}} = \mu_{X^{n-}} - nF\varphi^{ES}$$

$$\widetilde{\mu}_{X_n} = \mu_{X_n}$$

A chaque interface, les potentiels électrochimiques des espèces en équilibre sont égaux. Dans le cas de l'interface entre l'électrode 11 (compartiment 1 pour l'indice) et la couche 23 (compartiment 2 pour l'indice) de la membrane protonique, on obtient les équations suivantes :

$$\widetilde{\mu}_{H_2}^1 = 2\widetilde{\mu}_{H^+}^{ES,1} + 2\widetilde{\mu}_{e-}^1$$

$$2\widetilde{\mu}_{H^+}^{ES,2} + 2\widetilde{\mu}_{e-}^2 = \widetilde{\mu}_{H_2}^2$$

Dans le cas de l'interface entre la couche 23 (compartiment 2 pour l'indice) et l'électrode 2 (compartiment 3 pour l'indice) de la membrane anionique, on obtient les équations suivantes :

$$\widetilde{\mu}_{O_2}^2 = 2\widetilde{\mu}_{O^{2-}}^{ES,2} + 4\widetilde{\mu}_{e-}^2$$

$$2\widetilde{\mu}_{O^{2-}}^{ES,3} + 4\widetilde{\mu}_{e-}^3 = \widetilde{\mu}_{O_2}^3$$

Une particularité des électrolytes solides ioniques est que la concentration en porteurs de charge est identique dans tout le volume du matériau lorsque le matériau est à l'équilibre. Par conséquent les potentiels chimiques des espèces conductrices sont également égaux :

$$\mu_{H^+}^{ES,1} = \mu_{H^+}^{ES,2}$$

$$\mu_{O^{2-}}^{ES,2} = \mu_{O^{2-}}^{ES,3}$$

$$\mu_{e-}^1 = \mu_{e-}^2$$

Tension aux bornes de la membrane protonique :

$$\begin{cases} \mu_{H_2}^1 = 2\mu_{H^+}^{ES,1} + 2F\varphi^{ES,1} + 2\mu_{e-}^1 - 2F\varphi^1 \\ 2\mu_{H^+}^{ES,2} + 2F\varphi^{ES,2} + 2\mu_{e-}^2 - 2F\varphi^2 = \mu_{H_2}^2 \end{cases}$$
$$\Rightarrow \mu_{H_2}^1 - \mu_{H_2}^2 = 2F(\varphi^{ES,1} - \varphi^{ES,2}) + 2(\mu_{e-}^1 - \mu_{e-}^2) - 2F(\varphi^1 - \varphi^2)$$

Le potentiel chimique d'un gaz est lié à sa pression partielle :

$$\mu_{H_2} = \mu_{0,H_2} + RT \ln \frac{p_1}{p_0}$$

A l'aide de cette expression, on peut relier la différence de potentiel aux bornes d'une membrane à la différence de pression partielle gazeuse dans chaque compartiment de part et d'autre de la membrane :

$$\varphi^1 - \varphi^2 = -\frac{RT}{2F}\ln\frac{p_{H_2,1}}{p_{H_2,2}}$$

Tension aux bornes de la membrane anionique :

En appliquant le même raisonnement que précédemment, on obtient :

$$\varphi^3 - \varphi^2 = \frac{RT}{4F}\ln\frac{p_{O_2,3}}{p_{O_2,2}}$$

En fixant des valeurs de pressions partielles d'oxygène de l'ordre de 0,2 bar dans les compartiments « riches » et $10^{-18}$ dans les compartiments « pauvres », la différence de potentiels totale est calculable. Pour des valeurs réalistes des pressions partielles (telles qu'utilisées dans les calculs relatifs aux SOFC), on trouve une différence de potentiel égale à 2,4V aux bornes de cette membrane mixte protonique et anionique, ce qui est plus de deux fois supérieur à la tension aux bornes d'une SOFC ou d'une PCFC. Par rapport à ces piles, pour une tension et une densité de courant équivalentes, un empilement sera deux fois moins encombrant.

Le fonctionnement de la cellule 17 est réversible. En effet, si on considère une cellule 17 sans membrane de reformage 24 et qu'on lui applique un courant, cette cellule étant alimentée par de l'eau, il est possible d'obtenir de l'hydrogène et de l'oxygène.

Plus précisément, si un courant électrique est imposé de l'électrode 2 vers l'électrode 11, la cellule fonctionne alors à l'envers et devient un électrolyseur à haute température.

Dans ce cas, l'eau est pompée vers la couche 23 de liaison. Comme la céramique protonique de la couche 23 de liaison possède des propriétés catalytiques de dissociation de l'eau, des protons H+ et des anions 02- sont formés dans la couche de liaison 23.

Les protons formés dans la couche de liaison 23 progressent au travers de l'électrolyte 13 vers la couche 11, qui devient alors la cathode du système, et au sein de laquelle les protons H+ captent des électrons pour former de l'hydrogène H2.

Par ailleurs, les anions 02- formés dans la couche de liaison 23 progressent au travers de l'électrolyte 4 vers l'électrode 2, qui devient alors l'anode du système, et au sein de laquelle les ions 02- relâchent des électrons pour former de l'oxygène 02.

Un tel système est innovant par rapport aux systèmes d'électrolyseurs actuels car il permet la séparation totale entre d'une part l'eau, d'autre part l'hydrogène, et en dernier lieu l'oxygène.

En effet, un électrolyseur constitué d'une SOFC fonctionnant à l'envers produit de l'oxygène à l'anode, et un mélange d'eau et d'hydrogène à la cathode, qu'il faudra filtrer ultérieurement pour obtenir de l'hydrogène. Or un mélange H2/H2O à haute température est délicat à manipuler. Avec l'invention le filtrage de l'hydrogène n'est pas nécessaire, l'hydrogène obtenu étant séparé de l'eau.

En outre, un électrolyseur constitué d'une PCFC fonctionnant à l'envers produit de l'hydrogène à la cathode, et un mélange d'eau et d'oxygène à l'anode. Or un mélange H2O/O2 à haute température est hautement corrosif pour les connecteurs électriques d'un tel système. Il n'existe pas un tel mélange corrosif avec l'invention, l'oxygène obtenu étant séparé de l'eau.

## Revendications

1. Pile à combustible haute température **caractérisée en ce qu'**elle comporte:

   - une première cellule (10) formée par une anode (11) et un premier électrolyte (13) céramique à conduction protonique en assurant la conduction des protons H+ contact l'un avec l'autre
   - une deuxième cellule (1) de type SOFC formée par une cathode (2) et un deuxième électrolyte (4) céramique à conduction anionique assurant la conduction des anions O2- en contact l'un avec l'autre, et
   - une couche de liaison (23) positionnée entre le premier et le deuxième électrolyte, cette couche de liaison (23) assurant une jonction entre le premier et le deuxième électrolyte,
- cette couche de liaison (23) étant à base de matériau poreux et comportant

    - une phase d'oxyde protonique comme par exemple du BaCeO3, ou du BaZrO3 ou du SrCeO3,
    - une phase d'oxyde à conduction anionique, comme par exemple du YSZ ou un composite cérine/gadolinium, et
    - une phase poreuse destinée à l'évacuation de l'eau,
    - ces trois phases percolant dans la couche de liaison, la couche (23) de liaison étant le siège d'une recombinaison entre des protons $H^+$ et des anions $O^{2-}$

2. Pile à combustible selon la revendication 1, **caractérisée en ce que** la couche (23) de liaison comporte au moins 30% d'oxyde protonique, au moins 30 % d'oxyde ionique et au moins 30% de matériau poreux.

3. Pile à combustible selon la revendication 1 ou 2, **caractérisée en ce qu'**elle comporte en outre :

- une membrane (24) de reformage en contact avec l'anode (11), cette membrane (24) transformant un hydrocarbure en hydrogène, cette membrane (24) étant à base de nickel (27) et comportant des nanodiamants (37), ces nanodiamants (37) permettant de piéger des particules (28) de carbone qui apparaissent lors de la transformation de l'hydrocarbure, ce carbone étant piégé sous forme filamentaire à proximité des particules de nickel (27).

4. Pile à combustible selon la revendication 3, **caractérisée en ce que** :

- les nanodiamants (37) possèdent une taille comprise entre 5 et 30nm.

5. Pile à combustible selon l'une des revendications 1 à 4, **caractérisée en ce que** :

- l'anode (11) est dopée avec des cations hétérovalents de manière à être un conducteur mixte de protons H+ et d'électrons, cette anode étant réalisée en BaCeO3, ou en SrCe03 ou en BaZrO3 ou en cermet.

6. Pile à combustible selon l'une des revendications 1 à 5, **caractérisée en ce que** :

- le premier électrolyte (13) est en céramique protonique dense non conducteur électronique à base de SrCeO3 ou de BaZrO3, ou de BaCeO3 non dopé.

7. Pile à combustible selon l'une des revendications 1 à 6, **caractérisée en ce que** :

- la cathode (2) est un conducteur mixte en milieu oxydant à base de LSM, cette cathode étant conductrice des ions oxygène 02- et d'électrons.

8. Pile à combustible selon l'une des revendications 1 à 7, **caractérisée en ce que** :

- le deuxième électrolyte (4) est à base de zircone stabilisée à l'yttrine (ZrO2/Y2O3) ou en cérine et est conducteur des ions O2- mais non conducteur électronique.

9. Pile à combustible selon l'une des revendications 1 à 8, **caractérisée en ce qu'**elle comprend une combinaison d'une cellule (1) de pile anionique et d'une cellule (10) de pile protonique, la cellule (1) de pile anionique et la cellule (10) de pile protonique étant respectivement dépourvues d'anode (3) et de cathode (12), des électrolytes (4, 13) de ces cellules (1, 10) étant reliées par l'intermédiaire d'une couche (23) de liaison permettant la recombinaison d'ions 02- générés par la cellule (1) de pile anionique et d'ions H+ générés par la cellule (10) de pile protonique pour former de l'eau.

10. Utilisation de la pile à combustible selon l'une des revendications 1, 2, 5 à 9 comme électrolyseur.

**Claims**

1. High temperature fuel cell, **characterized in that** it comprises:

- a first cell element (10) formed by an anode (11) and a first ceramic electrolyte (13), having a protonic conduction property for the conduction of protons H+, in contact with one another,

- a second SOFC-type cell element (1) formed by a cathode (2) and a second ceramic electrolyte (4), having an anionic conduction property for the conduction of the anions $O^{2-}$, in contact with one another, and

- a binding layer (23) positioned between the first and the second electrolyte, this binding layer (23) being provided for a junction between the first and the second electrolyte,

- this binding layer (23) being made from a porous material and comprising

- a protonic oxide phase such as for example BaCe03, or BaZr03 or SrCe03,

- an oxide phase having an anionic conduction property, such as for example YSZ or a cerine/qadolinium composite material, and

- a porous phase for water draining,

- these three phases percolating into the binding layer, a recombination between protons H+ and anions $O^{2-}$ occurring in the binding layer (23).

2. Fuel cell according to claim 1, **characterized in that** the binding layer (23) comprises at least 30% of protonic oxide, at least 30% of ionic oxide and at least 30% of porous material.

3. Fuel cell according to claim 1 or 2, **characterized in that** it further comprises:

- a reforming membrane (24) in contact with the anode (11), this membrane (24) transforming a hydrocarbon into hydrogen, this membrane (24) being made from nickel (27) and comprising nanodiamonds (37), these nanodiamonds (37) allowing to trap carbon particles (28) which appear at the time of the hydrocarbon transformation, this carbon being trapped in filament form near the nickel particles (27).

4. Fuel cell according to claim 3, **characterized in that**:

- nanodiamonds (37) have a size comprised between 5 and 30 nm.

5. Fuel cell according to anyone of the claims 1 to 4, **characterized in that**:

- the anode (11) is doped with heterovalent cations so as to be a mixed conductor for protons H+ and electrons, this anode being made of BaCe03, or SrCe03 or BaZr03 or cermet.

6. Fuel cell according to anyone of the claims 1 to 5, **characterized in that**:

- the first electrolyte (13) is made of dense protonic ceramic material unable to conduct electrons and containing un-doped SrCe03 or BaZr03, or BaCe03.

7. Fuel cell according to anyone of the claims 1 to 6, **characterized in that**:

- the cathode (2) is a mixed conductor in an oxidizing environment containing LSM, this cathode being able to conduct oxygen ions $O^{2-}$ and electrons.

8. Fuel cell according to anyone of the claims 1 to 7, **characterized in that**:

- the second electrolyte (4) is made from yttrine-stabilized zirconia (ZrO2/Y203) or from cerine and is able to conduct ions $O^{2-}$ but unable to conduct electrons.

9. Fuel cell according to anyone of the claims 1 to 8, **characterized in that** it includes a combination of an anionic cell element (1) and of a protonic cell element (10), the anionic cell element (1) and the protonic cell element (10) being respectively without any anode (3) and cathode (12), electrolytes (4, 13) of these cell elements (1, 10) being connected to one another through a binding layer (23) allowing the recombination of ions $O^{2-}$ generated by the anionic cell element (1) and of ions H+ generated by the protonic cell element (10) to form water.

10. Use of the fuel cell according to anyone of the claims 1, 2, 5 to 9 an electrolyzer.

**Patentansprüche**

1.  Hochtemperaturbrennstoffzelle, **dadurch gekennzeichnet, dass** sie umfasst:

    - ein erstes Zellenelement (10), das durch eine Anode (11) und einen ersten Keramikelektrolyt (13) mit protonischer Leitungseigenschaft für die Leitung der Protonen H$^+$ in Kontakt miteinander gebildet wird,
    - ein zweites SOFC-Zellenelement (1), das durch eine Kathode (2) und einen zweiten Keramikelektrolyt (4) mit anionischer Leitungseigenschaft für die Leitung der Anionen O$^{2-}$ in Kontakt miteinander gebildet wird, und
    - eine zwischen erstem und zweitem Elektrolyt liegende Verbindungsschicht (23), wobei diese Verbindungsschicht (23) für eine Verbindung zwischen erstem und zweitem Elektrolyt bestimmt ist,
    - wobei diese Verbindungsschicht (23) aus porösem Material besteht, und
    - eine protonische Oxidphase wie beispielsweise BaCe03 oder BaZr03 oder SrCe03,
    - eine Oxidphase mit anionischer Leitungseigenschaft, wie beispielsweise YSZ oder Verbundmaterial cerine/qadolinium und
    - eine poröse Phase für Wasserableitung umfasst,
    - wobei diese drei Phasen in die Verbindungsschicht perkolieren, wobei eine Rekombination zwischen Protonen H$^+$ und Anionen O$^{2-}$ in der Verbindungsschicht (23) entsteht.

2.  Brennstoffzelle nach Anspruch 1, **dadurch gekennzeichnet, dass** die Verbindungsschicht (23) wenigstens 30% von protonischem Oxid, wenigstens 30% von ionischem Oxid und wenigstens 30% von porösem Material umfasst.

3.  Brennstoffzelle nach Anspruch 1 oder 2, **dadurch gekennzeichnet, dass** sie außerdem umfasst:

    - eine Reformierungsmembran (24) in Kontakt mit der Anode (11), wobei diese Membran (24) einen Kohlenwasserstoff in Wasserstoff umsetzt, wobei diese Membran (24) aus Nickel (27) besteht, und Nano-Diamanten (37) umfasst, wobei diese Nano-Diamanten (37) erlauben, Kohlenstoffpartikeln (28) einzusperren, die bei der Umsetzung des Kohlenwasserstoffs entstehen, wobei dieser Kohlenstoff in der Form von Filamenten nahe bei den Nickelpartikeln (27) eingesperrt wird.

4.  Brennstoffzelle nach Anspruch 3, **dadurch gekennzeichnet, dass**:

    - die Nano-Diamanten (37) eine Größe zwischen 5 und 30nm aufweisen.

5.  Brennstoffzelle nach einem der Ansprüche 1 bis 4, **dadurch gekennzeichnet, dass**:

    - die Anode (11) mit heterovalenten Kationen dotiert wird, sodass sie ein gemischter Leiter für die Protonen H$^+$ und die Elektronen ist, wobei diese Anode aus BaCe03 oder aus SrCe03 oder aus BaZr03 oder aus Cermet besteht.

6.  Brennstoffzelle nach einem der Ansprüche 1 bis 5, **dadurch gekennzeichnet, dass**:

    - der erste Elektrolyt (13) aus dichter, protonischer und nicht-Elektronleitender Keramik auf nicht-gedoptem SrCe03- oder BaZr03- oder BaCe03-Basis besteht.

7.  Brennstoffzelle nach einem der Ansprüche 1 bis 6, **dadurch gekennzeichnet, dass**:

    - die Kathode (2) ein gemischter Leiter in oxydierender Umgebung mit LSM ist, wobei diese Kathode dafür geeignet ist, Sauerstoff-Ionen O$^{2-}$ und Elektronen zu leiten.

8.  Brennstoffzelle nach einem der Ansprüche 1 bis 7, **dadurch gekennzeichnet, dass**:

    - der zweite Elektrolyt (4) aus mit Yttrin stabilisierter Zirkonerde (ZrO2/Y203) oder Cerine besteht, und dafür geeignet ist, Ionen O$^{2-}$ aber nicht Elektronen zu leiten.

9.  Brennstoffzelle nach einem der Ansprüche 1 bis 8, **dadurch gekennzeichnet, dass** sie eine Kombination eines anionischen Zellenelements (1) und eines protonischen Zellenelements (10) umfasst, wobei das anionische Zellenelement (1) und das protonische Zellenelement (10) ohne Anode (3) beziehungsweise Kathode (12) sind, wobei Elektrolyte (4, 13) dieser Zellenelemente (1, 10) über eine Verbindungsschicht (23) miteinander verbunden sind, welche die Rekombination von durch das anionische Zellenelement (1) erzeugten Ionen $O^{2-}$ und von durch das protonische Zellenelement (10) erzeugten Ionen $H^+$ zur Wasserbildung erlaubt.

10. Benutzung der Brennstoffzelle nach einem der Ansprüche 1, 2, 5 bis 9 als Elektrolyser.

## FIG_1
### ETAT DE LA TECHNIQUE

$$O_2 + 4e^- \rightarrow 2O^{2-}$$

$$O^{2-}$$

$$\frac{1}{2}O_2 + H_2 \rightarrow H_2O$$

Air $O_2$

$H_2$

$e^-$

## FIG_2
### ETAT DE LA TECHNIQUE

$e^-$

$$H_2 \rightarrow 2H^+ + 2e^-$$

$$H^+$$

$$2H^+ + \frac{1}{2}O_2 + 2e^- \rightarrow H_2O$$

$H_2$

Air $O_2$

## FIG_3

1V  30

1,23V  31

$e^-$  34

$((CH_4)$ hydrocarbures$)$

28 29 27

$N_i$

$$CH_4 \rightarrow C + 2H_2$$

$$H_2 \rightarrow 2H^+ + 2e^-$$

$$H^+$$

$$2H^+ + O^{2-} \rightarrow H_2O$$

$$O^{2-}$$

$$O_2 + 4e^- \rightarrow 2O^{2-}$$

Air $O_2$

$H_2O$

## FIG_4

| Compartiment 1 | Compartiment 2 | Compartiment 3 |
|---|---|---|

$H_2 \rightarrow 2H^+ + 2e^-$

$H^+$

$2H^+ + 2e^- \rightarrow H_2$

$2O^{2-} \rightarrow O_2 + 4e^-$

$O^{2-}$

$O_2 + 4e^- \rightarrow 2O^{2-}$

11    13    23    4    2